# EUROPÄISCHE PATENTSCHRIFT

(11) **EP 2 508 099 B1**
(45) Veröffentlichungstag und Bekanntmachung des Hinweises auf die Patenterteilung: **21.10.2015**
(21) Anmeldenummer: 12002429.4
(22) Anmeldetag: 04.04.2012
(51) Int. Cl.: A47B 13/00, F16B 12/52

(54) **Verbindung einer Holzplatte mit einem oder mehreren Holzständern und Gegenstand hergestellt unter Verwendung der Verbindung**
Connection of a wooden board with one or more wooden stands and object produced using the connection
Liaison d'une plaque en bois et d'un ou plusieurs supports en bois et objet fabriqué en utilisant cette liaison

(30) Priorität: 08.04.2011 DE 102011016520
(43) Veröffentlichungstag der Anmeldung: 10.10.2012
(73) Patentinhaber: Shemmer, David, 46391 Hertzelia (IL)
(72) Erfinder: Shemmer, David, 46391 Hertzelia (IL)
(74) Vertreter: Dahlmann, Gerhard

(56) Entgegenhaltungen:
- CA-A1- 2 070 350
- JP-A- 2004 159 698
- JP-A- 2010 094 396

## Beschreibung

### Technisches Gebiet

Für verschiedene Zwecke ist die Verbindung einer Platte mit einem oder mehreren Ständern vorgesehen. Dies ist insbesondere bei der Möbeltischlerei erforderlich, beispielsweise bei der Herstellung von Tischen unterschiedlichster Art. Weit verbreitet ist dabei die Ausbildung eines Gestells, bei dem die Tischbeine miteinander verbunden sind, auf das die Tischplatte aufgelegt und gegebenenfalls befestigt wird. Zum einen ist die Herstellung des Gestells material- und arbeitsaufwendig und zum anderen ist das Gestell sperrig und damit nachteilig beim Transport vom Hersteller zum Käufer oder auch zum Möbelhaus.

Durch das Dokument CA 2 070 350 A1 ist die Verbindung einer Holzplatte mit Ständern unter Verwendung einer quadratischen Metallplatte bekannt, bei der die Metallplatte über in Bohrungen in der Metallplatte und im Ständer eingefügte Schrauben mit metrischem Gewinde und einem senkrecht dazu in eine Bohrung im Ständer einzufügenden Dübelstab mit dem Ständer verbunden ist und der verbleibende über die Ständerfläche hinausragende Teil der Metallplatte an der Unterseite der Holzplatte angeschraubt ist. Zum einen ist die Verbindung zwischen Metallplatte und Ständer für den Käufer umständlich herzustellen, und zum anderen sind die Ränder der Metallplatte nach der Montage von außen sichtbar, was den ästhetischen Eindruck bei einem Tisch erheblich schmälert.

In dem Dokument JP 2010 094 396 A wird eine Montagestruktur dargestellt, bei der ebenfalls eine Metallplatte mit Schrauben verwendet wird. Die Metallplatte ist in der Holzplatte versenkt untergebracht. Sie ist in drei Bereiche unterteilt: einen ersten Bereich, der die ganze Oberfläche des Ständers abdeckt, einen zweiten Bereich, der hinter dem Ständer zur Mitte der Holzplatte weist und einem weiteren dritten Bereich, der nach außerhalb der Ständeroberfläche gerichtet ist. Die Befestigung der Metallplatte am Ständer erfolgt im ersten Bereich. Die beiden anderen Bereiche werden für die Befestigung an der Holzplatte benutzt. Damit die Befestigung durch Verschrauben im dritten Bereich erfolgen kann, muss der Ständer an seinem oberen Ende abgeschrägt sein. Die Konstruktion hat den Nachteil, dass die Holzplatte durch die Ausnehmungen für die Metallplatten stark an diesen Stellen geschwächt wird. Gleichzeitig wird durch die Schrägen an den Ständern eine Reduzierung deren Festigkeit bewirkt. Beides trägt zu einer möglichen Beschädigung an der Holzplatte durch den von den Ständern ausgehenden Hebelarmen bei.

### Darstellung der Erfindung

Der Erfindung liegt die Aufgabe zugrunde, hier Abhilfe zu schaffen und Möglichkeiten zu eröffnen, mit denen eine einfache Herstellung einer Verbindung zwischen einer Holzplatte und zugehörigen Holzständern durchführbar ist.

Die Lösung der gestellten Aufgabe wird mit den Merkmalen des Anspruchs 1 erreicht. Die Unteransprüche 2 bis 16 stellen vorteilhafte Weiterbildungen des Erfindungsgedankens dar.

Gemäß der Erfindung erfolgt die Verbindung der Holzplatte mit dem bzw. den Ständern über einen Bausatz, welcher im Wesentlichen aus einer oder mehreren, der Anzahl der Ständer entsprechenden Zahl von Metallplatten mit Durchbohrungen und einer der Zahl der Durchbohrungen entsprechenden Anzahl von Schrauben besteht. Die jeweilige Metallplatte ist dabei so ausgebildet, dass sie in zwei Bereiche unterteilt ist, von denen der erste Bereich flächenmäßig etwa die Stirnfläche eines Holzständers bedeckt und daran anzuschrauben ist und der zweite Bereich über die Stirnfläche des Holzständers hinausragt und an die Unterseite der Holzplatte anzuschrauben ist.

Damit die Metallplatte nach ihrem Verschrauben mit dem Holzständer bündig an der Unterseite der Holzplatte zur Anlage kommt, werden die Durchbohrungen des ersten Bereichs mit Fasen zur Aufnahme der Senkköpfe entsprechender Schrauben versehen. Auch die Durchbohrungen im zweiten Bereich können Fasen aufweisen.

Bei der einfachsten Ausführungsform genügt es, wenn eine Verbindung eines Holzständers mit der Holzplatte über eine Metallplatte und die zugehörigen Holzschrauben vorgenommen wird. Dabei kann es von Vorteil sein, wenn sowohl Holzständer als auch Holzplatte mit vorbereiteten Sackbohrungen für die Schrauben versehen sind.

Die bevorzugte Ausführungsform der Erfindung sieht jedoch vor, die Sackbohrungen zumindest in der Holzplatte mit Schraubmuffen zu versehen, welche Innengewinde haben, in die Schrauben mit metrischem Gewinde eingeschraubt werden können. Hierdurch wird eine sehr stabile Verbindung zwischen Holzplatte und Holzständer erreicht. Das Außengewinde der Schraubmuffen kann als Holzschraubengewinde ausgeführt sein, ggf. mit einer Rückdrehsicherung. Die verwendeten Schrauben mit metrischem Gewinde sind ebenfalls mit Senkköpfen versehen.

Im Allgemeinen ist die Ausstattung der Sackbohrungen in den Holzständern mit Schraubmuffen nicht erforderlich, da hier in den meisten Fällen längere Holzschrauben für die Festigkeit der Verbindung ausreichend sind. Bei Bedarf ist jedoch auch hier der Einsatz von Schraubmuffen mit metrischem Innengewinde und zugehörigen Schrauben möglich.

Eine weitere Verstärkung der Verbindung kann dadurch erreicht werden, indem die Metallplatte im ersten Bereich mit wenigstens einem Positionier- und Haltebolzen ausgestattet ist. Dieser wird passend in eine Sackbohrung in der Holzplatte eingefügt. Zum einen wird der mit der Metallplatte versehene Holzständer in der vorgegebenen Position an der Holzplatte eingesetzt und zum anderen trägt der bzw. tragen die Bolzen auch zur zusätzlichen Verstärkung der Verbindung bei.

Die Holzplatte hat eine der Anzahl der Haltebolzen entsprechende Zahl von Sackbohrungen. Dabei ist es günstig, wenn in dieselben ebenfalls Schraubmuffen eingedreht sind, in deren Hohlräume die Haltebolzen passend eingesetzt werden können. Letztere sind in diesem Fall ohne Innengewinde. Die Außengewinde der Schraubmuffen können sowohl als Holzschraubengewinde oder auch als metrische Schraubengewinde ausgebildet sein.

Zur Vereinfachung der Fertigung der Metallplatte und der Anbringung der Bolzen an derselben wird der Durchmesser der Bolzen so gewählt, dass er dem Innendurchmesser der Durchbohrungen für die Schrauben entspricht. Die Bolzen können in die Durchbohrungen eingesetzt und reibschlüssig mit der Platte verbunden werden. Denkbar sind aber auch Schraub-, Niet- oder Schweißverbindungen.

Eine die Stabilität der Verbindung zwischen Holzplatte und Holzständer erhöhende Ausgestaltung der Bolzen bei gleichzeitig einfacher Fertigung ist dadurch erreichbar, dass der Bolzen in seinem von der Durchbohrung abstehenden Abschnitt mit einem verstärkten Durchmesser ausgeführt ist. Der Durchmesser ist größer als der Innendurchmesser der Durchbohrung. Hierdurch ist die Festigkeit de Bolzens erhöht und seine Einsetztiefe in die Durchbohrung festgelegt. Auch wird ein Überstehen des Bolzens über die zum Holzständer gerichtete Fläche der Metallplatte hierdurch vermieden.

Die Herstellung eines Tisches aus einer Tischplatte aus Holz und wenigstens einem Holzständer erfolgt unter Verwendung eines Bausatzes nach Anspruch 1 aus Metallplatten und Schrauben , indem die Metallplatten zunächst an den Holzständern und danach die Metallplatten mit den daran befestigten Holzständern mit der Tischplatte verschraubt werden. Bei Benutzung nur eines Holzständers ist die Tischplatte mit der dem Holzständer gegenüberliegenden Seite an einer Wand oder dgl. anzubringen. Bevorzugt wird jedoch eine rechteckige Tischplatte benutzt, an deren Ecken die Holzständer über die Metallplatten angebracht werden. Die Länge der Holzständer kann je nach Art des Tisches gewählt werden, z.B. für einen Esstisch , einen Couchtisch oder einen Arbeitstisch. Die Tischplatten sind ebenfalls in verschiedenen Größen einsetzbar. Durch die bevorzugte Ausführung der Metallplatten mit Haltebolzen und der Tischplatte mit Schraubmuffen für die Haltebolzen und den Schrauben mit metrischem Gewinde entsteht ein sehr stabiler Tisch, auch in Längen bis zu vier Metern.

Um die Verpackung, den Transport und den Zusammenbau des Tisches zu erleichtern, kann eine Vormontage erfolgen, indem die Metallplatten bereits an die Holzständer angeschraubt sind und die Tischplatte alle erforderlichen Sackbohrungen, auch mit den Schraubmuffen, aufweist. Der Käufer hat dann lediglich mit den gelieferten Schrauben die Tischbeine an die Tischplatte anzuschrauben.

Eine gute Optik der Verbindungsstellen von Tisch und Tischbeinen wird dadurch erreicht, dass die Metallplatten an ihren sichtbaren Seitenkanten von Holz abgedeckt sind. Dieses wird in günstiger Weise durch in den Stirnflächen der Holzständer angebrachte Einfräsungen erreicht. Die Einfräsungen haben die Stärke der Metallplatten und sind an den Umriss des ersten Bereichs der Metallplatte angepasst. Sie haben in den Holzeinfassungen Unterbrechungen für den zweiten Bereich der Metallplatte.

Anhand zweier in der Zeichnung dargestellter Ausführungsbeispiele wird die Erfindung nachstehend näher erläutert.

Es zeigt:
- Fig. 1: eine Draufsicht auf eine an einem Tischbein befestige Metallplatte,
- Fig. 2: einen Schnitt nach der Linie B-B durch die Fig. 1 mit angeschraubter Tischplatte,
- Fig. 3: die Darstellungen nach den Fig. 1 und 2, jedoch mit eingeschraubten Schraubmuffen.

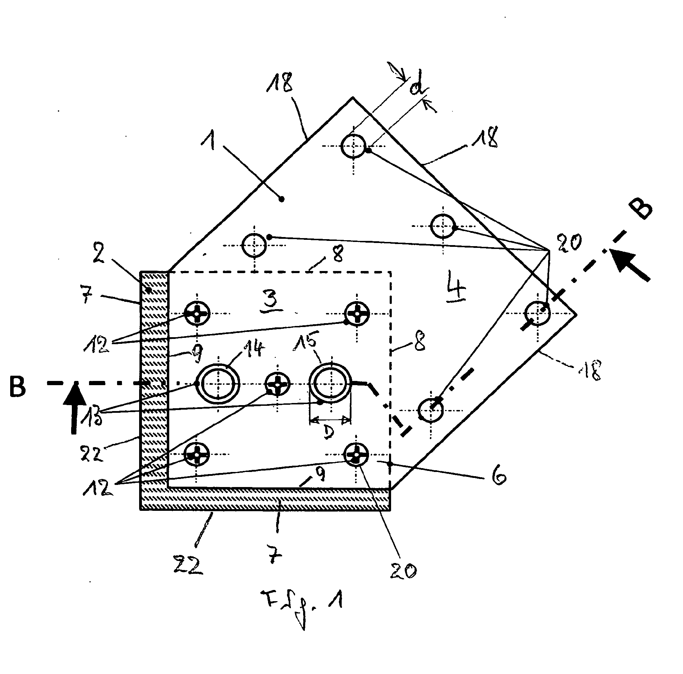

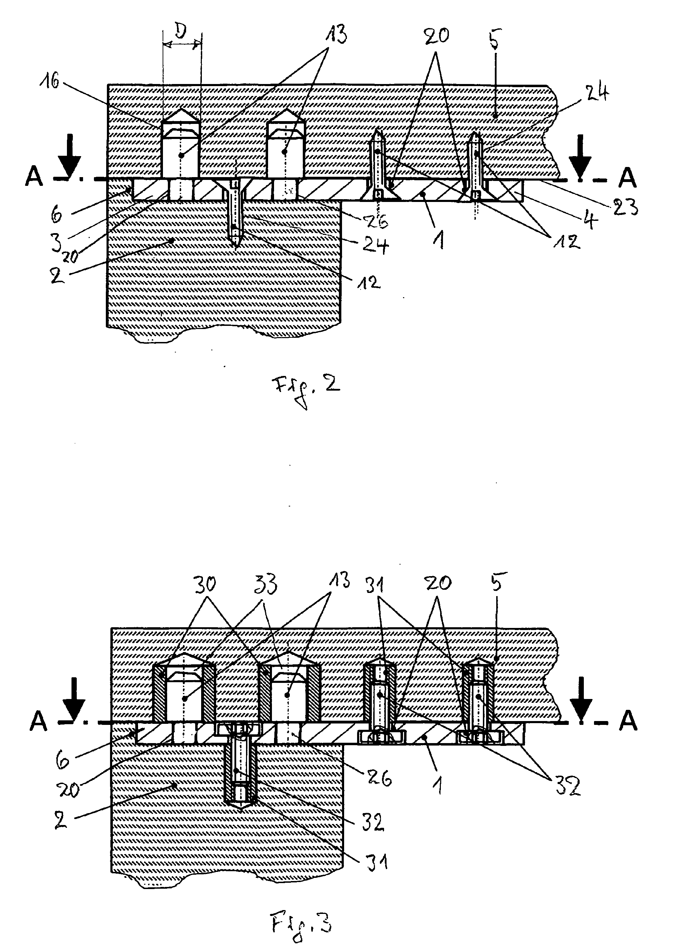

In den Fig. 1 und 2 ist die Metallplatte 1 mit einem im Querschnitt viereckigen Tischbein 2 verschraubt. Die Metallplatte 1 ist fünfeckig. Sie hat die Durchbohrungen 20 und ist in die zwei Bereiche 3 und 4 unterteilt. Der erste Bereich 3 ist mit dem Tischbein 2 verschraubt, während der zweite Bereich 4 an die Tischplatte 5 anzuschrauben ist. Der erste Bereich 3 ist in die Einfräsung 6 an der Stirnfläche des Tischbeins 2 eingefügt. Er besteht aus einem Viereck, das von den Kanten 8 des Tischbeins 2 und der Kante 9 der Platte 1 begrenzt ist. Die Kanten 9 liegen an den Innenkanten der Einfräsung 6 an, während die gestrichelten Linien 8 die innere Kontur des Tischbeins 2 wiedergeben. Für die Befestigung der Metallplatte 1 am Tischbein 2 sind fünf Holzschrauben 12 verwendet. Außerdem sind zwei Positionier- und Haltebolzen 13 an der Metallplatte 1 angebracht, die zur Tischplatte hin ausgerichtet sind. Die über der Metallplatte 1 liegenden Abschnitte 14 der Bolzen sind mit verstärkten Durchmessern D ausgeführt. Sichtbar sind auch die Fasen 15 an den Bolzen 13, die eine erleichterte Einführung der Bolzen 13 in an der Tischplatte 5 angebrachte Sackbohrungen 16 ergeben.

Der zweite Bereich 4 der Metallplatte 1 ragt nach innen über die Stirnfläche des Tischbeins 2 hinaus. Er wird umgrenzt von den drei Kanten 18 der Metallplatte 1 und den unterbrochenen Linien 8, welche die innere Kontur des Tischbeins 2 zeigen. Dieser Bereich 4 dient zur Befestigung des Tischbeins 2 an der Tischplatte 5. Er hat die Durchbohrungen 20, welche im Durchmesser d gleich groß wie die Durchbohrungen 20 für die Schrauben 12 sind.

An der Stirnfläche des Tischbeins 2 ist eine Einfräsung 6 angebracht, welche den ersten Bereich 3 der Metallplatte 1 aufnimmt. Die Tiefe der Einfräsung 6 ist gleich der Stärke S der Metallplatte 1. Die Einfräsung 6 lässt an den Außenseiten 22 des Tischbeins2 den Rand 7 stehen, so dass bei fertig montiertem Tisch die Metallplatte 1 seitlich außen verdeckt ist.

Die Tischplatte 5 und die Tischbeine 2 sind mit Sackbohrungen 24 für die Schrauben 12 versehen. Dabei haben die Schrauben 12 vorzugsweise die gleiche Länge. Es sind zwei Haltebolzen 13 an der Metallplatte 1, die passend in die Sackbohrungen 16 in der Tischplatte 5 eingefügt sind. Die Bolzen 13 sind mit den Stummeln 26 ausgestattet, die reibschlüssig in Durchbohrungen 20 eingedrückt sind. Der Durchmesser D der Bolzen 13 oberhalb der Durchbohrungen 20 ist größer als der verbliebene in die Durchbohrung 20 eingefügte Stummel 26.

Die Ausführungsform nach der Fig. 3 entspricht in seinen Komponenten dem Beispiel nach den Fig. 1 und 2 mit der Abweichung, dass in die Sackbohrungen 16 und 24 Schraubmuffen 30 und 31 eingeschraubt sind. Die Schraubmuffen 31 haben Außengewinde mit einer Rückdrehsicherung und Innengewinde für metrische Schrauben 32. Bei den Sackbohrungen 16 für die Haltebolzen 13 sind die größeren Schraubmuffen 30 eingeschraubt, deren Hohlräume 33 jedoch ohne Gewinde sind. Die Ausgestaltung nach Fig. 3 ist die bevorzugte Ausbildung der Erfindung. Sie ergibt eine besonders hohe Festigkeit der Verbindung einer Tischplatte mit den zugehörigen Tischbeinen über eine daran zu verschraubende Metallplatte.

## Patentansprüche

1. Verbindung einer Holzplatte (5) mit einem oder mehreren Holzständern (2) über einen Bausatz aus einer Metallplatte (1) mit Durchbohrungen (20) und einer der Zahl der Durchbohrungen (20) entsprechenden Anzahl von Schrauben (12), **dadurch gekennzeichnet, dass** die Metallplatte (1) in zwei Bereiche (3 und 4) unterteilt ist, von denen der erste Bereich (3) flächenmäßig etwa der Stirnfläche des Holzständers (2) entspricht und in eine in der Stirnfläche des bzw. der Holzständer (2) angebrachte Einfräsung (6) in der Stärke (S) der Metallplatte (1) eingefügt und daran angeschraubt ist und der über die Stirnfläche des Holzständers (2) hinausragende zweite Bereich (4) an die Unterseite (23) der Holzplatte (5) angeschraubt ist.

2. Verbindung nach Anspruch 1, **dadurch gekennzeichnet, dass** die Durchbohrungen (20) für die Bereiche (3, 4) Fasen (15) zur versenkten Aufnahme der Schraubenköpfe haben.

3. Verbindung nach Anspruch 2, **dadurch gekennzeichnet, dass** die Schrauben (12) für die Bereiche (3, 4) Holzbauschrauben (12) mit Senkköpfen sind.

4. Verbindung nach einem oder mehreren der Ansprüche 1 bis 3, **dadurch gekennzeichnet, dass** die Holzplatte (5) und die Holzständer (2) mit Sackbohrungen (24) zur Aufnahme der Schrauben (12) versehen sind.

5. Verbindung nach Anspruch 4, **dadurch gekennzeichnet, dass** in die Sackbohrungen (24) Schraubmuffen (31) mit Innenschraubgewinde eingedreht sind.

6. Verbindung nach Anspruch 5, **dadurch gekennzeichnet, dass** die Schraubmuffen (31) eine Rückdrehsicherung haben.

7. Verbindung nach Ansprüchen 5 oder 6, **dadurch gekennzeichnet, dass** die Schrauben (12) für den zweiten Bereich (4) Senkköpfe haben.

8. Verbindung nach einem oder mehreren der Ansprüche 1 bis 7, **dadurch gekennzeichnet, dass** die Metallplatte (1) im ersten Bereich (3) wenigstens einen Positionier- und Haltebolzen (13) hat, der passend in eine Sackbohrung (16) in der Holzplatte (5) einfügbar ist.

9. Verbindung nach einem oder mehreren der Ansprüche 1 bis 8, **dadurch gekennzeichnet, dass** die Holzplatte (5) eine der Anzahl der Haltebolzen (13) entsprechende Zahl von Sackbohrungen (16) zur Aufnahme des bzw. der Haltebolzen (13) hat.

10. Verbindung nach Anspruch 9, **dadurch gekennzeichnet, dass** in die Sackbohrungen (16) für die Haltebolzen (13) Schraubmuffen (30) eingedreht sind, in deren Hohlräume (33) die Haltebolzen (13) passend einsetzbar sind.

11. Verbindung nach einem oder mehreren der Ansprüche 8 bis 10, **dadurch gekennzeichnet, dass** die Befestigung der Bolzen (13) an der Metallplatte (1) über Durchbohrungen (20) in der Metallplatte (1) erfolgt, wobei der Durchmesser der Bolzen (13) dem Innendurchmesser der Durchbohrungen (20) für die Schrauben (12) entspricht und die Bolzen (13) reibschlüssig in die Durchbohrungen (20) eingefügt sind.

12. Verbindung nach einem oder mehreren der Ansprüche 8 bis 11, **dadurch gekennzeichnet, dass** der Bolzen (13) oberhalb der Durchbohrung (20) einen verstärkten Durchmesser (D) hat.

13. Verbindung nach einem der Ansprüche 1 bis 12, **dadurch gekennzeichnet, dass** der bzw. die Holzständer (2) an den Seitenkanten der Holzplatte (5) angeordnet sind.

14. Verbindung nach einem der Ansprüche 1 bis 12, **dadurch gekennzeichnet, dass** die Holzständer (2) an den Ecken der Holzplatte (5) angeordnet sind.

15. Verbindung nach einem oder mehreren der Ansprüche 1 bis 14, **dadurch gekennzeichnet, dass** die Holzeinfassung der Einfräsung (6) einen Durchlass für den zweiten Bereich (4) der Metallplatte (1) hat.

16. Verbindung nach einem oder mehreren der Ansprüche 1 bis 15, **dadurch gekennzeichnet, dass** die Holzeinfassungen an den Einfräsungen (6) der Holzständer (2) zur Außenseite der Holzplatte (5) gerichtet sind.

## Claims

1. Connection of a wooden board (5) to one or more wooden stands (2) via an assembly set consisting of a metal plate (1) with through-holes (20) and of a number of screws (12) corresponding to the number of through-holes (20), **characterized in that** the metal plate (1) is subdivided into two regions (3 and 4), of which the first region (3) corresponds in area approximately to the end face of the wooden stand (2) and is inserted into a milled recess (6), which is made in the end face of the wooden stand or stands (2) and has the same thickness (S) as the metal plate (1), and is screwed thereto, and the second region (4), which projects beyond the end face of the wooden stand (2), is screwed to the underside (23) of the wooden board (5).

2. Connection according to Claim 1, **characterized in that** the through-holes (20) for the regions (3, 4) have bevels (15) for the countersunk reception of the screw heads.

3. Connection according to Claim 2, **characterized in that** the screws (12) for the regions (3, 4) are wood screws (12) with countersunk heads.

4. Connection according to one or more of Claims 1 to 3, **characterized in that** the wooden board (5) and the wooden stands (2) are provided with blind holes (24) for receiving the screws (12).

5. Connection according to Claim 4, **characterized in that** screw sleeves (31) with an internal screw thread are screwed into the blind holes (24).

6. Connection according to Claim 5, **characterized in that** the screw sleeves (31) have a safeguard against reverse rotation.

7. Connection according to Claims 5 and 6, **characterized in that** the screws (12) for the second region (4) have countersunk heads.

8. Connection according to one or more of Claims 1 to 7, **characterized in that** the metal plate (1) has, in the first region (3), at least one positioning and retaining bolt (13) which can be inserted in a fitting manner into a blind hole (16) in the wooden board (5).

9. Connection according to one or more of Claims 1 to 8, **characterized in that** the wooden board (5) has a number of blind holes (16) which correspond to the number of retaining bolts (13) and are intended for receiving the retaining bolt or bolts (13).

10. Connection according to Claim 9, **characterized in that** screw sleeves (30) are screwed into the blind holes (16) for the retaining bolts (13), the retaining bolts (13) being able to be inserted in a fitting manner into the cavities (33) of said screw sleeves.

11. Connection according to one or more of Claims 8 to 10, **characterized in that** the bolts (13) are fastened to the metal plate (1) via through-holes (20) in the metal plate (1), wherein the diameter of the bolts (13) corresponds to the inside diameter of the through-holes (20) for the screws (12) and the bolts (13) are inserted frictionally into the through-holes (20).

12. Connection according to one or more of Claims 8 to 11, **characterized in that** the bolt (13) has an increased diameter (D) above the through-hole (20).

13. Connection according to one of Claims 1 to 12, **characterized in that** the wooden stand or stands (2) is/are arranged at the side edges of the wooden board (5).

14. Connection according to one of Claims 1 to 12, **characterized in that** the wooden stands (2) are arranged at the corners of the wooden board (5).

15. Connection according to one or more of Claims 1 to 14, **characterized in that** the wooden edging of the milled recess (6) has a passage for the second region (4) of the metal plate (1).

16. Connection according to one or more of Claims 1 to 15, **characterized in that** the wooden edgings on the milled recesses (6) of the wooden stands (2) are directed towards the outer side of the wooden board (5).

## Revendications

1. Assemblage d'une plaque en bois (5) à un ou plusieurs supports en bois (2) par le biais d'un kit de montage constitué d'une plaque métallique (1) avec des orifices (20) et d'un nombre de vis (12) correspondant au nombre des orifices (20), **caractérisé en ce que** la plaque métallique (1) est divisée en deux régions (3 et 4) dont la première région (3) correspond dans sa dimension en surface approximativement à la face frontale du support en bois (2) et est introduite, puis vissée, dans un fraisage (6) dans l'épaisseur (S) de la plaque métallique (1) réalisé dans la face frontale du ou des supports en bois (2) et dont la deuxième région (4) faisant saillie au-delà de la face frontale du support en bois (2) est vissée au côté inférieur (23) de la plaque en bois (5).

2. Assemblage selon la revendication 1, **caractérisé en ce que** les orifices (20) pour les régions (3, 4) présentent des biseaux (15) pour recevoir de manière renfoncée les têtes de vis.

3. Assemblage selon la revendication 2, **caractérisé en ce que** les vis (12) pour les régions (3, 4) sont des vis à bois (12) avec des têtes fraisées.

4. Assemblage selon l'une quelconque ou plusieurs des revendications 1 à 3, **caractérisé en ce que** la plaque en bois (5) et les supports en bois (2) sont pourvus de trous borgnes (24) pour recevoir les vis (12).

5. Assemblage selon la revendication 4, **caractérisé en ce que** des manchons de vis (31) avec un filetage de vis intérieur sont vissés dans les trous borgnes (24).

6. Assemblage selon la revendication 5, **caractérisé en ce que** les manchons de vis (31) présentent une protection contre le retrait.

7. Assemblage selon les revendications 5 ou 6, **caractérisé en ce que** les vis (12) pour la deuxième région (4) présentent des têtes fraisées.

8. Assemblage selon l'une quelconque ou plusieurs des revendications 1 à 7, **caractérisé en ce que** la plaque métallique (1) présente dans la première région (3) au moins un boulon de positionnement et de retenue (13) qui peut être introduit avec ajustement dans un trou borgne (16) dans la plaque en bois (5).

9. Assemblage selon l'une quelconque ou plusieurs des revendications 1 à 8, **caractérisé en ce que** la plaque en bois (5) présente un nombre de trous borgnes (16) pour recevoir le ou les boulons de retenue (13) correspondant au nombre des boulons de retenue (13).

10. Assemblage selon la revendication 9, **caractérisé en ce que** des manchons de vis (30) sont vissés dans les trous borgnes (16) pour les boulons de retenue (13), les boulons de retenue (13) pouvant être insérés avec ajustement dans les cavités (33) des trous borgnes.

11. Assemblage selon l'une quelconque ou plusieurs des revendications 8 à 10, **caractérisé en ce que** la fixation des boulons (13) à la plaque métallique (1) s'effectue par le biais d'orifices (20) dans la plaque métallique (1), le diamètre des boulons (13) correspondant au diamètre intérieur des orifices (20) pour les vis (12) et les boulons (13) étant introduits avec ajustement par friction dans les orifices (20).

12. Assemblage selon l'une quelconque ou plusieurs des revendications 8 à 11, **caractérisé en ce que** le boulon (13) présente, au dessus de l'orifice (20), un diamètre élargi (D).

13. Assemblage selon l'une quelconque des revendications 1 à 12, **caractérisé en ce que** le ou les supports en bois (2) sont disposés au niveau des arêtes latérales de la plaque en bois (5).

14. Assemblage selon l'une quelconque des revendications 1 à 12, **caractérisé en ce que** les supports en bois (2) sont disposés au niveau des coins de la plaque en bois (5).

15. Assemblage selon l'une quelconque ou plusieurs des revendications 1 à 14, **caractérisé en ce que** la bordure en bois du fraisage (6) présente un passage pour la deuxième région (4) de la plaque métallique (1).

16. Assemblage selon l'une quelconques ou plusieurs des revendications 1 à 15, **caractérisé en ce que** les bordures en bois au niveau des fraisages (6) des supports en bois (2) sont orientées vers le côté extérieur de la plaque en bois (5).
